**Europäisches Patentamt**

**European Patent Office**

**Office européen des brevets**

(19)

(11) Veröffentlichungsnummer : **0 344 664 B1**

(12) **EUROPÄISCHE PATENTSCHRIFT**

(45) Veröffentlichungstag der Patentschrift :
**29.07.92 Patentblatt 92/31**

(51) Int. Cl.$^5$ : **B01J 8/14,** A23L 1/18,
A23P 1/14

(21) Anmeldenummer : **89109598.6**

(22) Anmeldetag : **27.05.89**

(54) **Verfahren zum Expandieren von stärkehaltigen Produkten.**

(30) Priorität : **02.06.88 DD 316348**

(43) Veröffentlichungstag der Anmeldung :
**06.12.89 Patentblatt 89/49**

(45) Bekanntmachung des Hinweises auf die
Patenterteilung :
**29.07.92 Patentblatt 92/31**

(84) Benannte Vertragsstaaten :
**AT CH DE ES FR GB IT LI SE**

(56) Entgegenhaltungen :
**EP-A- 0 089 800
DE-A- 1 910 003
GB-A- 15 686
GB-A- 889 173
GB-A- 1 183 355
GB-A- 2 013 477
US-A- 3 701 667
US-A- 4 152 974
US-A- 4 438 682
US-A- 4 532 155**

(73) Patentinhaber :
**TROCKNUNGS-ANLAGEN-GESELLSCHAFT
MBH
Am Alten Bahnhof 5
W-3300 Braunschweig (DE)
Patentinhaber : SKET Schwermaschinenbau
Magdeburg GmbH
Marienstrasse 20, Postfach 77
O-3011 Magdeburg (DE)**

(72) Erfinder : **Mörl, Lothar, Prof.Dr.sc.techn.
Schillerstrasse 46
O-3080 Magdeburg (DE)**
Erfinder : **Künne, Hans-Joachim, Dr.sc.techn.
Lion-Feuchtwanger-Strasse 2
O-3090 Magdeburg (DE)**
Erfinder : **Krell, Lothar, Dr.-Ing.
Otto-Baer-Strasse 53
O-3033 Magdeburg (DE)**
Erfinder : **Strümke, Manfred, Prof.Dr.-Ing.
Willi-Bredel-Strasse 1
O-3090 Magdeburg (DE)**
Erfinder : **Schmidt, Jörg Dipl.-Ing.
Uhlandstrasse 20
O-3080 Magdeburg (DE)**
Erfinder : **Schuart, Lothar, Prof.Dr.sc.techn.
Schrotebogen 12
O-3034 Magdeburg (DE)**

(74) Vertreter : **Döring, Rudolf, Dr.-Ing. et al
Patentanwälte Dr.-Ing. R. Döring Dipl.-Phys.
Dr. J. Fricke Jasperallee 1a
W-3300 Braunschweig (DE)**

## Beschreibung

Die Erfindung betrifft ein Verfahren zum Expandieren von stärkehaltigen Produkten.

In der Lebensmittelindustrie wird eine Vielzahl von stärkehaltigen Produkten verarbeitet. In einer Reihe von Fällen ist es erforderlich, diese Produkte zu expandieren, beispielsweise bei der Herstellung von Popcorn aus Mais.

Besondere Probleme bestehen dabei beim Expandieren unregelmäßig geformter stärkehaltiger Produkte. Das wird bisher erreicht, indem diese stärkehaltigen Produkte in siedendes Öl getaucht wurden. Wegen des hohen Ölgehaltes ist das dabei entstehende expandierte stärkehaltige Produkt ernährungsphysiologisch ungünstig. Aufgrund der großen aktiven Öloberfläche hat dieses expandierte stärkehaltige Produkt nur eine beschränkte Haltbarkeit. Deshalb wird ein Verfahren gesucht, das es ermöglicht, stärkehaltige Produkte unabhängig von ihrer Form ohne Öl zu expandieren.

Bekannt ist es, zur Herstellung von Popcorn aus Mais heißes Gas, meist heiße Luft, zu verwenden. Derartige Verfahren sind in den Patentschriften DE 29 04 587 und US 4 438 682 beschrieben. Bei diesen Verfahren werden die Maiskörner einer annähernd zylindrischen Kammer, in der die Maiskörner expandiert werden, zugeführt. In diese Kammer strömt Luft mit einer Geschwindigkeit größer als die Lockerungsgeschwindigkeit (s. H. Schubert "Aufbereitung fester mineralischer Rohstoffe", Bd.2 S.62, VEB Deutscher Verlag für Grundstoffindustrie, Leipzig, 1978) der nicht expandierten Maiskörner und die Schwebegeschwindigkeit der expandierten Maiskörner sowie kleiner als die Schwebegeschwindigkreit (s. H. Schubert "Aufbereitung fester minertalischer Rohstoffe", Bd.1 S.242, VEB Deutscher Verlag für Grundstoffindustrie, Leipzig, 1975) der nicht expandierten Maiskörner von unten nach oben.

Diese Geschwindigkeiten werden hierbei auf oberflächengleiche, sphärische Partikel mit gleichen Materialeigenschaften bezogen. Die eingeblasene Luft hat eine Temperatur von etwa 200°C. Durch das Expandieren der Maiskörner wird ihre Dichte gesenkt und ihre Oberfläche vergrößert. Dadurch liegt die Schwebegeschwindigkeit der expandierten Maiskörner deutlich unter der der aufgegebenen nicht expandierten Maiskörner. Da die Strömungsgeschwindigkeit des Gases größer als die Schwebegeschwindigkeit der expandierten Maiskörner ist, werden diese unmittelbar nach dem Expandieren durch den Gasstrom ausgetragen. Dieses Verfahren ist für ein stärkehaltiges Produkt aus annähernd sphärischen Partikeln mit einer engen Korngrößenverteilung einsetzbar.

Bei stärkehaltigen Produkten, deren Partikel wesentlich von der Kugelform abweichen, ist dieses Verfahren nicht zu verwenden, weil sich derartige Produkte unter den in den oben angeführten Patentschriften genannten Bedingungen nicht in einen homogenen Fluidisationszustand versetzen lassen und deshalb eine gleichmäßig schnelle Erwärmung und das Expandieren des stärkehaltigen Produktes in einer guten Qualität nicht möglich ist. Außerdem wird der sofortige Austrag aller Partikel des expandierten stärkehaltigen Produktes mit dem Heißgas unmittelbar nach der Expansion durch die unregelmäßige Form und die deshalb in Abhängigkeit von der Stellung des Partikels zum Gasstrom stark schwankende Schwebegeschwindigkeit unmöglich gemacht.

Aus den genannten Gründen ist das beschriebene Verfahren für Produkte, die wesentlich von der Kugelform abweichen, nicht anwendbar.

Demgegenüber liegt die Aufgabe der Erfindung darin, ein Verfahren zum ölfreien Expandieren von stärkehaltigen Produkten vorzuschlagen, das unabhängig von der Form der Produkte anwendbar ist.

Diese Aufgabe wird erfindungsgemäß dadurch gelöst, daß das nicht expandierte stärkehaltige Produkt einer Kammer, in der das stärkehaltige Produkt expandiert, aufgegeben wird, daß es dort dem Erdschwere- oder einem Zentrifugalkraftfeld oder beiden zugleich ausgesetzt wird, daß dabei ein heißes Gas-Dampf-Gemisch mit einer Temperatur zwischen 210°C und 270°C mit einem Winkel zwischen 45° und 120° zur Wirkungsrichtung des Kraftfeldes in die Kammer, in der das stärkehaltige Produkt expandiert, einströmt, daß dieses heiße Gas-Dampf-Gemisch eine Einströmgeschwindigkeit besitzt, die dem Zwei- bis Zehnfachen der Schwebegeschwindigkeit des nicht expandierten stärkehaltigen Produktes entspricht, daß dem Gas-Dampf-Gemisch in der Kammer, in der das stärkehaltige Produkt expandiert, eine Geschwindigkeitskomponente aufgeprägt wird, die der Richtung des Kraftfeldes entgegensteht und kurz vor dem Abzug des Gas-Dampf-Gemisches etwa der halben Schwebegeschwindigkeit des expandierten stärkehaltigen Produktes entspricht.

Es wird also ein Verfahren zum Expandieren von stärkehaltigen Produkten vorgeschlagen, bei dem der Wärmetransport vom Heizmedium zum stärkehaltigen Produkt unabhängig von der Kornform bei allen Partikeln intensiv und gleichmäßig erfolgt.

Dieses Verfahren gewährleistet eine hohe Qualität der expandierten stärkehaltigen Produkte. Als Kraftfeld kann am einfachsten das Erdschwerefeld verwendet werden. Dann wird dem Gas-Dampf-Gemisch eine Einströmgeschwindigkeit von 14 bis 70 m/s verliehen und in der Kammer, in der das stärkehaltige Produkt expandiert, eine Geschwindigkeitskomponente, die der Richtung des Kraftfeldes entgegensteht, mit einem Betrag von 0,5 bis 5,0 m/s aufgeprägt.

Die Verweilzeit des stärkehaltigen Produktes beträgt 12 bis 70s. Außerdem kann das Verfahren im Zentrifugalkraftfeld realisiert werden. Die in diesem Fall notwendigen Geschwindigkeiten sind von der Stärke des Zentrifugalkraftfeldes und von den Eigenschaften des stärkehaltigen Produktes abhängig. Das Zentrifugalkraftfeld kann durch eine zirkulierende Strömung des Gas-Dampf-Gemisches oder durch die Verwendung einer rotierenden Trommel als Kammer, in der das stärkehaltige Produkt expandiert, erzeugt werden. Durch den Einsatz eines Zentrifugalkraftfeldes wird es möglich, ein stärkeres Kraftfeld als das Erdschwerefeld zu nutzen. Dadurch kann der Prozeß des Wärmetransportes wesentlich intensiviert werden. Ein weiterer Vorteil des Zentrifugalkraftfeldes ist, daß es in weiten Grenzen verändert werden kann. Dadurch ergeben sich zusätzliche Möglichkeiten, den Prozeß zu steuern.

Vorteilhafterweise wird ein Gas-Dampf-Gemisch genutzt, das überwiegend aus Dampf besteht. Um Energie zu sparen, kann das Gas-Dampf-Gemisch im Kreislauf gefördert werden, wobei ein Volumen Gas-Dampf-Gemisch ausgekreist wird, das dem Volumen des bei der Expansion entstehenden Wasserdampfes entspricht.

Neben dem Einsatz von Mais zur Herstellung von Popcorn ist das Verfahren insbesondere bei der Herstellung von Kartoffelchips geeignet. Diese haben eine extrem unregelmäßige Form und erhalten bei einer Bearbeitung mit diesem Verfahren eine hohe Qualität ohne große aktive Öloberfläche.

Die Wirkungsweise der Erfindung ist etwa wie folgt:

Durch die Gutaufgabe werden die nicht expandierten stärkehaltigen Produkte (etwa Mais oder entsprechend zugeschnittene bzw. geformte Kartoffeln bzw. Kartoffelteile) der Kammer, in der das stärkehaltige Produkt expandiert, aufgegeben. In dem in dieser Kammer aufgebauten Kraftfeld bewegt sich das stärkehaltige Produkt zum Eintrag des Gas-Dampf-Gemisches. Es wird von diesem Gemisch erfaßt und aufgrund der hohen Strömungsgeschwindigkeit sofort fluidisiert. Unter Fluidisierung wird die Definition gemäß der internationalen Patentklassifikation (IPK, 4.Ausgabe 1984, 2.Anmerkung zu Klasse BO1J, Seite 16) verstanden. Demnach sind unter "fluidisierten Teilchen" bzw. aufgewirbelten Teilchen feinteilige feste Teilchen zu verstehen, die durch die Strömung eines fließenden Mediums angehoben und in Bewegung gehalten werden.

Dadurch ist von Anfang an ein intensiver Wärmetransport vom Gas-Dampf-Gemisch zum nicht expandierten stärkehaltigen Produkt realisiert. Indem dem Gas-Dampf-Gemisch eine Geschwindigkeitskomponente aufgeprägt wird, die dem Kraftfeld entgegengerichtet ist und einen Betrag kleiner als die halbe Schwebegeschwindigkiet hat, wird der Abzug des Gas-Dampf-Gemisches möglich, ohne gleichzeitig das stärkehaltige Produkt auszutragen. Dabei kann die dem stärkehaltigen Produkt durch das Gas-Dampf-Gemisch verliehene ursprüngliche Geschwindigkeit als Geschwindigkeitskomponente erhalten bleiben. Die dem Kraftfeld entgegengerichtete Geschwindigkeitskomponente kann dem Gas-Dampf-Gemisch z.B. aufgeprägt werden, indem dieses an einer Wand umgelenkt wird oder indem es durch nachströmendes Gas-Dampf-Gemisch verdrängt wird. Das stärkehaltige Produkt wird innerhalb des Apparates in eine zirkulierende Bewegung versetzt. Dadurch kommt jedes Partikel des stärkehaltigen Produktes wiederholt in den Bereich des Eintrages des Gas-Dampf-Gemisches, in dem der Wärmeübergang vom Gas-Dampf-Gemisch auf das stärkehaltige Produkt am intensivsten abläuft.

Durch die Verwendung eines Gas-Dampf-Gemisches, das überwiegend aus Wasserdampf besteht, wird der Wärmetransport auf die Partikel des stärkehaltigen Produktes in der Anfangsphase der Erwärmung wesentlich verbessert. Dem liegt die Erscheinung zugrunde, daß in der ersten Phase der Erwärmung auf den Partikeln des stärkehaltigen Produktes, die mit etwa Umgebungstemperatur in den Prozeß eingeführt werden, Wasser kondensiert. Da der Wärmetransport durch Kondensationsvorgänge stark beschleunigt wird, verläuft die Erwärmung in dieser Phase wesentlich schneller als bei der Verwendung von heißer Luft.

Im folgenden werden anhand der Zeichnung mehrere Ausführungsbeispiele der Erfindung im einzelnen erläutert.

Die Figur 1 stellt ein Schema zur möglichen Realisierung des erfindungsgemäßen Verfahrens im Erdschwerefeld dar.

In der Figur 2 ist eine Variante der Realisierung des Verfahrens in einem Zentrifugalkraftfeld vertikal geschnitten skizziert.

In der Figur 3 ist die in der Figur 2 skizzierte Variante des Verfahrens horizontal geschnitten dargestellt.

In Figur 4 ist eine Anlage mit der in Figur 1 dargestellten Realisierungsart des Verfahrens schematisch dargestellt.

Das erfindungsgemäße Verfahren zum Expandieren von stärkehaltigen Produkten soll am Beispiel eines stärkehaltigen Produktes im Erdschwerefeld beschrieben werden. Das stärkehaltige Produkt besteht aus stäbchenförmigen Partikeln. Diese Partikel haben eine quadratische Grundfläche mit einer Seitenlänge von 1 mm und eine Höhe von 10 mm. Das Gas-Dampf-Gemisch hat beim Einströmen eine Temperatur von 235°C. Es besteht zu 95% aus Wasserdampf. Das Gas-Dampf-Gemisch wird mit einer Geschwindigkeit von 35 m/s in den Reaktionsraum eingeleitet. Die Geschwindigkeitskomponente des Gas-Dampf-Gemisches, die entgegen dem Erdschwerefeld gerichtet ist, hat kurz vor dem Abzug des Gas-Dampf-Gemisches einen Absolutbetrag von 0,7 m/s. Die mittlere Verweilzeit des stärkehaltigen Produktes im Prozeß beträgt 40 Sekunden.

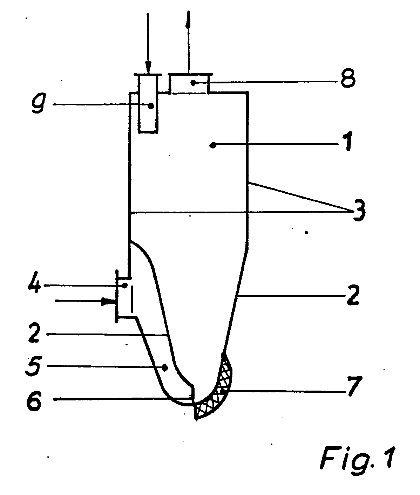

Der in Fig. 1 dargestellte Apparat ermöglicht die diskontinuierliche Realisierung des erfindungsgemäßen Verfahrens im Erdschwerefeld.

Er besteht im wesentlichen aus einer kanalförmigen Kammer 1, in der das stärkehaltige Produkt expandiert, die in ihrm unteren Teil Wände 2 besitzt, die um etwa 80° gegen die Horizontale geneigt sind, während der obere Teil vertikale Wände 3 hat. Der untere Teil der Kammer 1, in der das stärkehaltige Produkt expandiert, besteht außerdem aus einem runden Boden und einer Aufgabe für das Gas-Dampf-Gemisch, die sich aus einer Zuführung 4, einer Verteilung 5 und einer etwa vertikalen Einlaßöffnung 6 an der tiefsten Stelle des Apparates zusammensetzt. Die Einlaßöffnung 6 gewährleistet das zum Boden tangentiale Einblasen des Gas-Dampf-Gemisches. Der der Einlaßöffnung 6 gegenüberliegende Teil des runden Bodens lenkt das Gas-Dampf-Gemisch mit dem fluidisierten stärkehaltigen Produkt entgegen der Schwerkraft nach oben und ist als Klappe 7 zum diskontinuierlichen Austrag des stärkehaltigen Produktes ausgebildet. Der obere Teil der Kammer 1, in der das stärkehaltige Produkt expandiert, schließt mit einer Abdeckung ab, in der ein Abzug 8 für das Gas-Dampf-Gemisch und oberhalb der Aufgabe des Gas-Dampf-Gemisches eine Zuführung 9 des stärkehaltigen Produktes angeordnet sind.

Die Breite des Apparates verhält sich zur Breite der Einlaßöffnung 6 etwa wie 10:1.

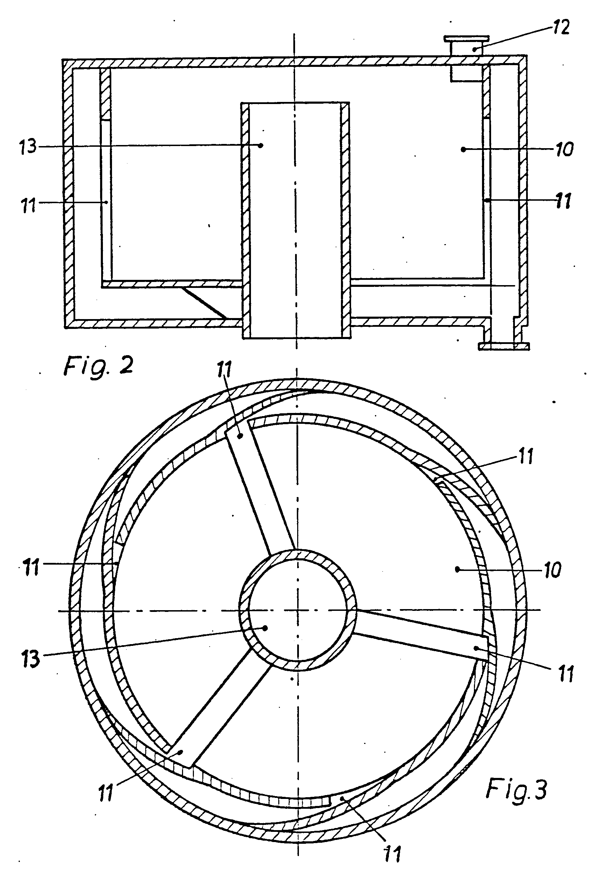

Der in den Figuren 2 und 3 dargestellte Apparat ermöglicht die Realisierung des erfindungsgemäßen Verfahrens kontinuierlich in einem Zentrifugalkraftfeld unter zusätzlicher Nutzung des Erdschwerefeldes.

Er besteht aus einer zylindrischen Kammer 10 mit vertikaler Achse, in der das stärkehaltige Produkt expandiert. Durch eine gerade Anzahl, vorzugsweise sechs, von spaltförmigen Öffnungen 11 erfolgt das tangentiale Einblasen des Gas-Dampf-Gemischeds in die Kammer 10, in der das stärkehaltige Produkt expandiert. Drei dieser Öffnungen setzen sich im Boden des Apparates fort. Durch sie wird das Gas-Dampf-Gemisch in der Strömungsrichtung der Wandspalte um 5° bis 10° nach oben gerichtet in die Kammer 10, in der das stärkehaltige Produkt expandiert, eingeblasen. Die Gutaufgabe 12 befindet sich oben an der äußeren Wand der Kammer 10, in der das stärkehaltige Produkt expandiert. Der Austrag des expandierten stärkehaltigen Produktes erfolgt zusammen mit dem Gas-Dampf-Gemisch durch einen im zentrum delr Kammer 10, in der das stärkehaltige Produkt expandiert, mit vertikaler Achse angeordneten Hohlzylinder 13, der vertikal verschiebbar ist.

Die einzustellenden Geschwindigkeiten und der notwendige Volumenstrom Gas-Dampf-Gemisch sind in Abhängigkeit von dem vorliegenden Produkt zu ermitteln.

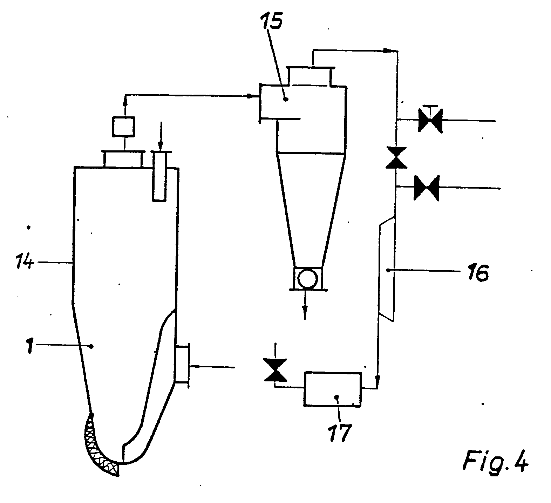

Die in Fig. 4 dargestellte Anlage enthält neben dem Expansionsapparat 14 einen diesem nachgeschalteten Aerozyklon 15 zur Abscheidung mitgerissener Staubpartikel. Das Gas-Dampf-Gemisch strömt aus dem Aerozyklon 15 einem Verdichter 16 und danach einem Wärmeübertrager 17 zu. Danach wird es der Kammer 1, in der das stärkehaltige Produkt expandiert, wieder zugeführt.

## Patentansprüche

1. Verfahren zum Expandieren von stärkehaltigen Produkten, **gekennzeichnet dadurch**, daß das nicht expandierte stärkehaltige Produkt einer Kammer (1), in der das stärkehaltige Produkt expandiert, aufgegeben wird, daß es dort dem Erdschwere- oder einem Zentrifugalkraftfeld oder beiden zugleich ausgesetzt wird, daß dabei ein heißes Gas-Dampf-Gemisch mit einer Temperatur zwischen 210°C und 270°C mit einem Winkel zwischen 45° und 120° zur Wirkungsrichtung des Kraftfeldes in die Kammer (1), in der das stärkehaltige Produkt expandiert, einströmt, daß dieses heiße Gas-Dampf-Gemisch eine Einströmgeschwindigkeit besitzt, die dem Zwei- bis Zehnfachen der Schwebegeschwindigkeit des nicht expandierten stärkehaltigen Produktes entspricht, daß dem Gas-Dampf-Gemisch in der Kammer (1), in der das stärkehaltige Produkt expandiert, eine Geschwindigkeitskomponente aufgeprägt wird, die der Richtung des Kraftfeldes entgegensteht und kurz vor dem Abzug des Gas-Dampf-Gemisches etwa der halben Schwebegeschwindigkeit des expandierten stärkehaltigen Produktes entspricht.

2. Verfahren zum Expandieren von stärkehaltigen Produkten nach Anspruch 1, **gekennzeichnet dadurch**, daß bei Nutzung des Erdschwerefeldes dem Gas-Dampf-Gemisch eine Einströmgeschwindigkeit von 14 bis 70 m/s verliehen wird, die dem Gas-Dampf-Gemisch in der Kammer (1), in der das stärkehaltige Produkt expandiert, aufgeprägte Geschwindigkeitskomponente, die der Richtung des Kraftfeldes entgegensteht, einen Betrag von 0,5 bis 5,0. m/s aufweist und die Verweilzeit des stärkehaltigen Produktes in der Kammer (1), in der das stärkehaltige Produkt expandiert, 12 bis 70 Sekunden beträgt.

3. Verfahren zum Expandieren von stärkehaltigen Produkten nach Anspruch 1 oder nach Anspruch 1 und 2, **gekennzeichnet dadurch**, daß ein Gas-Dampf-Gemisch genutzt wird, daß überwiegend aus Wasserdampf besteht.

4. Verfahren zum Expandieren von stärkehaltigen Produkten nach Anspruch 1 oder 1 und 2 oder 1 und 2 und 3 oder 1 und 3, **gekennzeichnet dadurch**, daß das Gas-Dampf-Gemisch im Kreislauf gefördert wird, wobei ein Volumen des Gas-Dampf-Gemisches ausgekreist wird, daß dem Volumen des beim Expandieren entstehenden Wasserdampfes entspricht.

## Claims

1. A process for expanding starch-containing products, **characterized in that** the non-expanded starch-containing product is conveyed to a chamber (1) in which the starch-containing product expands, it is subjected there to the field of the earth's gravity or a field of centrifugal force or to both at the same time, a hot gas-steam mixture at a temperature of between 210°C and 270°C flows into the chamber (1) - in which the starch-containing product expands - at an angle of between 45° and 120° to the angle of action of the field of force, the said hot gas-steam mixture has an inflow velocity corresponding to between two and ten times the suspension velocity of the non-expanded starch-containing product, the gas-steam mixture in the chamber (1) in which the starch-containing product expands has superimposed on it a velocity component opposite to the direction of the field of force and corresponding to approximately half the suspension velocity of the expanded starch-contaning product shortly before the removal of the gas-steam mixture.

2. A process for expanding starch-containing products according to Claim 1, **characterized in that** when using the field of the earth's gravity an inflow velocity of from 14 to 70 m/s is imparted to the gas-steam mixture, the velocity component, superimposed on the gas-steam mixture in the chamber (1) in which the starch-containing product expands and opposite to the direction of the field of force, amounts to from 0,5 to 5,0 m/s and the dwell period of the starch-containing product in the chamber (1) in which the starch-containing product expands amounts to from 12 to 70 seconds.

3. A process for expanding starch-containing products according to Claim 1 or according to Claims 1 and 2, **characterized in that** a gas-steam mixture is used which consists predominantly of water vapour.

4. A process for expanding starch-containing products according to Claim 1 or 1 and 2 or 1 and 2 and 3 or 1 and 3, **characterized in that** the gas-steam mixture is conveyed in the circuit, a volume of the gas-steam mixture which corresponds to the volume of the water vapour formed during the expansion being removed from the circuit.

## Revendications

1. Procédé d'expansion de produits contenant de l'amidon, **caractérisé en ce que** le produit contenant de l'amidon, non expansé, est introduit dans une chambre (1) dans laquelle il s'expanse, en ce qu'il y est exposé au champ de la gravité terrestre ou à un champ de force centrifuge, ou les deux en même temps, en ce qu'un mélange chaud gaz-vapeur, à une température située entre 210°C et 270°C, est injecté, sous un angle compris entre 45° et 120° par rapport à la direction d'action du champ de force, dans la chambre (1) dans laquelle le produit est expansé, en ce que ce mélange chaud gaz-vapeur présente une vitesse d'injection qui correspond au double, jusqu'au décuple, de la vitesse de vol en suspension du produit non expansé, en ce que, dans la chambre (1) dans laquelle le produit est expansé, est imprimée au mélange gaz-vapeur une composante de vitesse qui agit dans le sens inverse de la direction du champ de force et correspond, peu avant l'extraction du mélange gaz-vapeur, à peu près à la moitié de la vitesse de vol en suspension du produit expansé.

2. Procédé d'expansion de produits contenant de l'amidon selon la revendication 1, **caractérisé en ce que**, en cas d'utilisation du champ de gravité terrestre, il est conféré au mélange gaz-vapeur une vitesse d'injection située entre 14 à 70 m/s, la composante de vitesse imprimée au mélange gaz-vapeur, dans la chambre (1) dans laquelle le produit contenant de l'amidon est expansé et qui est orientée dans le sens inverse de celui du champ de force, présente une valeur située entre 0,5 à 5,0 m/s et le temps de séjour du produit dans la chambre (1), dans laquelle il est expansé, est situé entre 12 et 70 secondes.

3. Procédé d'expansion de produits contenant de l'amidon selon la revendication 1 ou selon les revendications 1 et 2, **caractérisé en ce qu**'est utilisé un mélange gaz-vapeur composé principalement de vapeur d'eau.

4. Procédé d'expansion de produits contenant de l'amidon selon la revendication 1 ou les revendications 1 et 2 ou 1 et 2 et 3 ou 1 et 3, **caractérisé en ce que** le mélange gaz vapeur est mis en circulation, avec évacuation du circuit d'un volume de mélange gaz vapeur qui correspond au volume de la vapeur d'eau produite lors de l'expansion.

Fig. 1

Fig. 2

Fig. 3

Fig. 4